# EUROPÄISCHE PATENTSCHRIFT

(11) **EP 2 400 204 B1**
(45) Veröffentlichungstag und Bekanntmachung des Hinweises auf die Patenterteilung: **20.04.2016**
(21) Anmeldenummer: 11167071.7
(22) Anmeldetag: 23.05.2011
(51) Int. Cl.: F16M 11/18, F16M 11/28, F16M 11/32

(54) **Stativ mit einer automatischen Höheneinstellung**
Stand with automatic height adjustment
Statif doté d'un réglage en hauteur automatique

(30) Priorität: 28.06.2010 DE 102010030592
(43) Veröffentlichungstag der Anmeldung: 28.12.2011
(73) Patentinhaber: HILTI Aktiengesellschaft, 9494 Schaan (LI)
(72) Erfinder: Lukic, Sasha, 9470, Buchs (CH); Ammann, Manfred, 6923, Lauterach (AT); Emberger, Holger-Max, 9470, Buchs (CH); Winter, Andreas, 6800, Feldkirch (AT); John, Andreas, 8892, Berschis (CH)
(74) Vertreter: Hilti Aktiengesellschaft Corporate Intellectual Property

(56) Entgegenhaltungen:
- BE-A1- 898 454
- JP-A- 2007 219 197
- US-A- 4 716 465
- US-A- 5 980 124
- US-A1- 2007 133 979

## Beschreibung

Die vorliegende Erfindung betrifft ein Stativ zur Höheneinstellung eines Gerätes in einer Höhenrichtung gemäß dem Oberbegriff des Anspruchs 1.

Um Nivellier- oder Markierungsarbeiten im Innen- und Außenbereich durchzuführen, sind Lasergeräte bekannt, die punkt- und/oder linienförmige Laserstrahlen erzeugen. Die Laserstrahlen dienen dazu, Referenzpunkte oder Referenzlinien auf Wänden, Decken und Böden anzuzeigen. Bei diesen Lasergeräten wird zwischen Rotationslasern, die einen linienförmigen Laserstrahl durch Rotation einer Laserstrahlquelle oder einer strahlumlenkenden Optik um eine Rotationsachse erzeugen, und Punkt- und/oder Linienlasern, die punkt- und/oder linienförmige Laserstrahlen mittels strahlformender Optiken, wie Zylinderlinsen und Prismen, erzeugen, unterschieden.

Um einen Laserstrahl in einer bestimmten Höhe auf eine Wand zu projizieren, ist es erforderlich, das Lasergerät in der entsprechenden Höhe anzuordnen. Bekannt sind Haltevorrichtungen, mit denen Lasergeräte an einer Wand, einer Wand- oder Deckenschiene, an einem Rohr und/oder einer magnetischen Konstruktion befestigt werden können, sowie Stative, die freistehend auf einen Untergrund positioniert werden. Stative weisen in der Regel einen Stativteller zur Befestigung eines Lasergerätes, einen Stativkopf und drei Stativbeine auf. Über die Länge der Stativbeine und ihre Standposition auf dem Untergrund bzw. den Kippwinkel der Stativbeine kann die Höhe des Stativs verändert werden. Die Höheneinstellung des Stativtellers relativ zum feststehenden Stativkopf erfolgt über eine Zahnstange, die manuell mit Hilfe einer Kurbel verstellt wird.

Bei Lasergeräten, die ohne Schutzmassnahmen, wie Schutzbrillen, eingesetzt werden dürfen, ist die maximal erlaubte Laserleistung begrenzt. Die erlaubten Laserleistungen führen bei Nivellier- und Markierungsarbeiten im Außenbereich häufig zu nicht oder schlecht sichtbaren Laserstrahlen. Um die Sichtbarkeit der Laserstrahlen zu verbessern, werden Laserempfänger in den Laserstrahl gehalten. Laserempfänger werden als Handgerät von einem Bediener direkt in den Laserstrahl gehalten oder an einer Teleskop- oder Nivellierstange befestigt. Der Laserstrahl wird optisch und akustisch auf dem Laserempfänger angezeigt.

Die bekannten Stative mit manueller Höheneinstellung weisen den Nachteil auf, dass die Höheneinstellung des Stativs auf eine gewünschte Höhe, die im Folgenden als Soll-Position bezeichnet wird, vor allem im Außenbereich bei eingeschränkten Sichtbedingungen nicht von einem Bediener alleine durchgeführt werden kann, sondern ein zweiter Bediener erforderlich ist. Der erste Bediener überwacht den Laserempfänger und der zweite Bediener verändert die Höheneinstellung des Stativs solange, bis das Stativ in der Soll-Position angeordnet ist. JP 2007 219197 A und US 5,980,124 A offenbaren jeweils ein Stativ zur Höheneinstellung einer Kamera mit einem Stativkopf, Stativbeinen, die über Kippgelenke mit dem Stativkopf verbunden und zwischen einer Standstellung und einer Transportstellung verstellbar sind, und einer Aufnahmeeinrichtung für die Kamera. Das Stativ umfasst außerdem eine Führungseinrichtung, die mit der Aufnahmeeinrichtung verbunden und in der Höhenrichtung verstellbar ist, und eine automatischen Höheneinstelleinrichtung mit mindestens einem Motor, der auf der den Stativbeinen abgewandten Oberseite des Stativkopfes angeordnet ist. Nachteilig bei den bekannten Stativen ist, dass der mindestens eine Motor der Höheneinstelleinrichtung bei einem Sturz des Stativs leicht beschädigt wird.

BE 898 454 A1 offenbart ein weiteres bekanntes Stativ zur Höheneinstellung eines Gerätes in einer Höhenrichtung mit einem Stativkopf, Stativbeinen, die über Kippgelenke mit dem Stativkopf verbunden sind, und einer Aufnahmeeinrichtung für das Gerät. Das Stativ umfasst außerdem eine als Schraubengewinde ausgebildete Führungseinrichtung, die mit der Aufnahmeeinrichtung verbunden und in der Höhenrichtung verstellbar ist, und eine automatische Höheneinstelleinrichtung zur Höheneinstellung des Schraubengewindes. Nachteilig ist, dass der Motor der automatischen Höheneinstelleinrichtung weit unterhalb des Stativkopfes über ein Gestell an den Stativbeinen befestigt ist und einen kompakten Aufbau des Stativs in der Transportstellung verhindert.

Wünschenswert wäre es, ein höhenverstellbares Stativ hinsichtlich der oben erläuterten Nachteile zu verbessern. Die Aufgabe der vorliegenden Erfindung besteht darin, ein Stativ bereitzustellen, das von einem einzelnen Bediener aus einer Ist-Position in eine Soll-Position einstellbar ist. Um das Stativ gut handhaben und transportieren zu können, sollte das Stativ außerdem kompakt und robust gegen äußere Einflüsse ausgebildet sein.

Diese Aufgabe wird bei dem eingangs genannten Stativ zur Höheneinstellung eines Gerätes in einer Höhenrichtung erfindungsgemäß durch die Merkmale des unabhängigen Anspruchs 1 gelöst.

Erfindungsgemäß ist die Höheneinstelleinrichtung auf der den Stativbeinen zugewandten Unterseite des Stativkopfes angeordnet und in der Transportstellung vollständig von einem durch den Stativkopf, die Stativbeine und die Kippgelenke aufgespannten Schutzraum umgeben. Die Anordnung der Höheneinstelleinrichtung auf der den Stativbeinen zugewandten Unterseite des Stativkopfes führt zu einem kompakten Aufbau des Stativs beim Transport, da kein zusätzlicher Platzbedarf für die Höheneinstelleinrichtung besteht.

Durch die Anordnung der Höheneinstelleinrichtung in dem durch den Stativkopf, die Stativbeine und die Kippgelenke aufgespannten Schutzraum ist die Höheneinstelleinrichtung beim Transport des Stativs durch die Stativbeine, die Kippgelenke und den Stativkopf geschützt. Kommt es in der Transportstellung zu einem Sturz des Stativs auf einen ebenen Untergrund oder ein großflächiges ebenes Hindernis, erfolgt der Aufprall auf die Stativbeine, den Stativkopf und/oder die Kippgelenke, die einen Großteil der Energie aufnehmen.

Der Stativkopf und/oder die Kippgelenke sind bevorzugt zumindest teilweise aus einem Material ausgebildet, das ein größeres Energieabsorptionsvermögen als ein die Höheneinstelleinrichtung umgebendes Gehäuse aufweist. Bei einem Sturz wird ein Grossteil der Energie über den Stativkopf und die Kippgelenke absorbiert, so dass die Gefahr, die Höheneinstelleinrichtung zu beschädigen, reduziert ist.

In einer bevorzugten Ausführung weist die Höheneinstelleinrichtung eine Antriebseinheit, die mit der Führungseinrichtung zusammenwirkt, und eine Überlastschutzeinrichtung auf, wobei die Überlastschutzeinrichtung die Führungseinrichtung bei Überschreiten einer Maximallast von der Antriebseinheit entkoppelt. Die Antriebseinheit ist besonders bevorzugt aus einem Elektromotor und einem selbsthemmenden Untersetzungsgetriebe, das mit einer als Zahnstange ausgebildeten Führungseinrichtung zusammenwirkt, ausgebildet. Bei einem Sturz sorgt die Überlastschutzeinrichtung, die als Rutschkupplung in das Untersetzungsgetriebe integriert ist, dafür, dass die Selbsthemmung des Untersetzungsgetriebes ausgeschaltet wird, so dass sich die Zahnstange relativ zur Höheneinstelleinrichtung verschieben kann. Dadurch wird eine Beschädigung der Antriebseinheit und/oder der Führungseinrichtung verhindert oder zumindest reduziert.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung.

Es zeigen:
- Fig. 1: ein erfindungsgemäßes Stativ mit einer automatischen Höheneinstellung, das in einer Standstellung angeordnet ist;
- Fig. 2: das erfindungsgemäße Stativ der Fig. 1 in einer Transportstellung; und
- Fig. 3: eine Aufsicht auf das erfindungsgemäße Stativ der Fig. 2 in der Transportstellung.

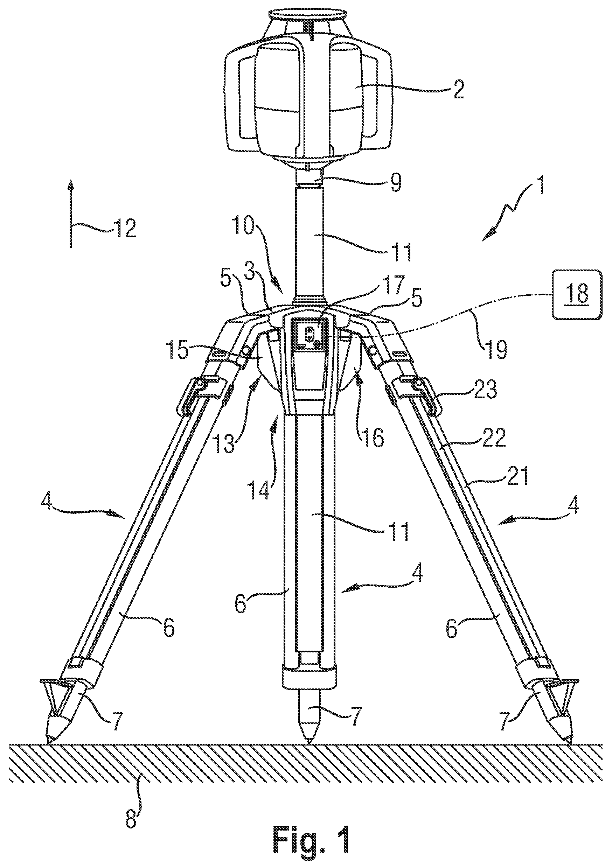

**Fig. 1** zeigt ein erfindungsgemäßes Stativ **1** mit einer automatischen Höheneinstellung in einer Standstellung mit einem auf dem Stativ 1 befestigten Lasergerät **2.** Das Stativ 1 ist zwischen der Standstellung, in der das Lasergerät 2 zu Nivellier- und Markierungsarbeiten einsetzbar ist, und einer Transportstellung, die zum Transport und zur Aufbewahrung des Stativs 1 dient, verstellbar ausgebildet. Auf dem Stativ 1 können neben Lasergeräten beispielsweise Messgeräte oder optische Geräte, wie Kameras, befestigt werden, die unter dem Begriff "Gerät" zusammengefasst werden.

Das Stativ 1 umfasst einen Stativkopf **3** und drei Stativbeine **4,** die identisch ausgebildet und mit dem Stativkopf 3 über Kippgelenke **5** verbunden sind. Die Stativbeine 4 sind innerhalb eines Winkelbereichs mittels der Kippgelenke 5 relativ zum Stativkopf 3 verschwenkbar. Die Stativbeine 4 bestehen aus einem oberen Beinabschnitt **6,** der als Rohr oder Profil ausgebildet und mit dem Kippgelenk 5 verbunden ist, und einem unteren Beinabschnitt **7,** der als Stativfuß ausgebildet ist und auf einen Untergrund **8** aufgesetzt wird. Abhängig vom Untergrund 8 können die Stativbeine 4 unterschiedliche Stativfüße 7 aufweisen, um einen sicheren Stand des Stativs 1 auf dem Untergrund 8 zu gewährleisten.

Das Lasergerät 2 ist lösbar auf einer verstellbaren Aufnahmeeinrichtung **9,** die als Stativteller ausgebildet ist, befestigt. Alternativ kann die Aufnahmeeinrichtung 9 als Gewindestange ausgebildet sein, die in ein entsprechendes Gewinde des Lasergerätes 2 eingedreht wird, um das Lasergerät 2 auf dem Stativ 1 zu befestigen. Der Stativteller 9 ist auf der dem Untergrund 8 abgewandten Seite des Stativkopfes 3, die als Oberseite **10** des Stativkopfes 3 bezeichnet wird, angeordnet und mit einer Führungseinrichtung **11** verbunden. Die Führungseinrichtung ist als Zahnstange 11 ausgebildet und in einer Richtung parallel zur Längserstreckung der Zahnstange 11, die als Höhenrichtung **12** bezeichnet wird, zwischen einer unteren Endposition und einer oberen Endposition verstellbar. In der unteren Endposition ist der Abstand zwischen dem Stativteller 9 und dem Stativkopf 3 minimal und in der oberen Endposition ist der Abstand zwischen dem Stativteller 9 und dem Stativkopf 3 maximal.

Die Höheneinstellung des Stativtellers 9 in der Höhenrichtung 12 relativ zum Stativkopf 3 erfolgt über eine automatische Höheneinstelleinrichtung **13,** die auf einer den Stativbeinen 4 zugewandten Seite des Stativkopfes 3, die als Unterseite **14** bezeichnet wird, angeordnet ist. Die Höheneinstelleinrichtung 13 besteht aus einem Gehäuse **15,** einer in dem Gehäuse 15 angeordneten Antriebseinheit **16** und einer Bedienungseinrichtung **17,** die in das Gehäuse 15 integriert und von außen bedienbar ist. Neben der in das Gehäuse 15 integrierten Bedienungseinrichtung 17 ist eine weitere Bedienungseinrichtung in Form einer Fernbedienungseinrichtung **18** vorgesehen, die über eine kabellose Kommunikationsverbindung **19,** beispielsweise in Form einer Funk- oder Infrarotverbindung, mit der Antriebseinheit 16 verbunden ist. Die Stromversorgung der Höheneinstelleinrichtung 13 erfolgt über Einweg- oder wiederaufladbare Batterien, die in ein Batteriefach im Gehäuse 15 der Höheneinstelleinrichtung 13 eingesetzt werden. Zusätzlich kann ein Ladeanschluss zur Verbindung eines Stromkabels vorgesehen sein.

Die Antriebseinheit 16 ist beispielsweise als Motorantrieb, hydraulischer Antrieb oder pneumatischer Antrieb ausgebildet. Die Höheneinstelleinrichtung 13 weist als Sicherheitseinrichtung eine Überlastschutzeinrichtung auf, die die Führungseinrichtung 11 bei Überschreiten einer Maximallast von der Antriebseinheit 16 entkoppelt. In der in Fig. 1 gezeigten Ausführung sind die Führungseinrichtung als Zahnstange 11 und die Antriebseinheit als motorische Antriebseinheit 16 ausgebildet. Die Antriebseinheit 16 besteht aus einem Elektromotor und einem selbsthemmenden Untersetzungsgetriebe, in das eine Rutschkupplung als Überlastschutzeinrichtung eingebaut ist. Die Rutschkupplung sorgt bei einem Sturz oder einem anderen Ereignis, bei dem die Maximallast überschritten wird, dafür, dass die Selbsthemmung des Untersetzungsgetriebes ausgeschaltet wird und die Zahnstange 11 von dem Untersetzungsgetriebe entkoppelt wird, so dass sich die Zahnstange 11 relativ zur Antriebseinheit 16 verschieben kann.

Die maximale Höhe des Stativs 1 in Höhenrichtung 12 ist von der Länge und der Standposition der Stativbeine 4 sowie der Länge der Zahnstange 11 abhängig. Aus Stabilitätsgründen sollte die Zahnstange 11 nicht zu lang ausgebildet sein. Um den Höhenbereich des Stativs 1 zu erweitern, bestehen die Stativbeine 4 aus einem äußeren Profilabschnitt **21** und einem inneren Profilabschnitt **22,** die teleskopartig ineinander verschiebbar sind. Die Profilabschnitte 21, 22 sind über eine Klemmeinrichtung **23,** die in Form eines Klemmhebels ausgebildet ist, gegeneinander klemmbar. Die Höhe des Stativs 1 wird über die verstellbaren Stativbeine 4 grob auf die gewünschte Höhe eingestellt. Die exakte Einstellung des Stativs 1 auf die Soll-Position erfolgt mit Hilfe der Höheneinstelleinrichtung 13.

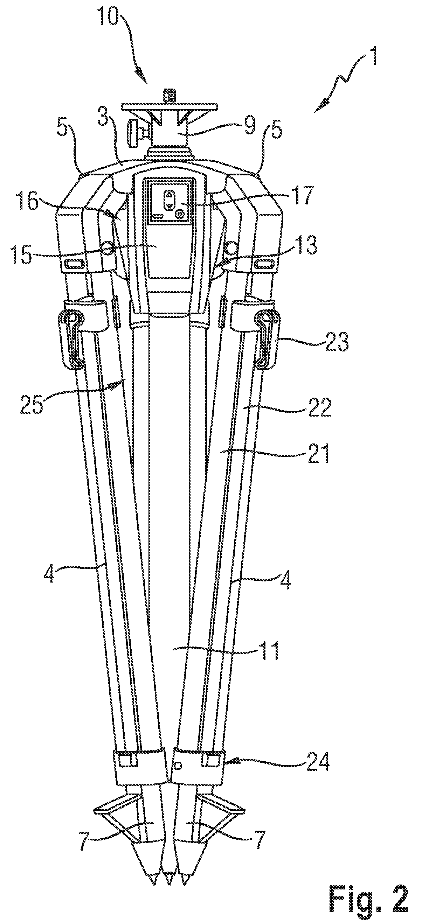

Fig. 2 zeigt das erfindungsgemäße Stativ 1 der Fig. 1 in der Transportstellung, die zum Transport und zur Aufbewahrung des Stativs 1 vorgesehen ist.

Um das Stativ 1 aus der in Fig. 1 gezeigten Standstellung in die Transportstellung zu überführen, wird das Lasergerät 2 vom Stativteller 9 entfernt und die Führungsstange 11 mittels der Höheneinstelleinrichtung 13 in die untere Endposition verfahren. Dies erfolgt noch in der Standstellung des Stativs 1 bei eingeschalteter Höheneinstelleinrichtung 13. Anschließend wird die Höheneinstelleinrichtung 13 ausgeschaltet. Bei Stativen 1, die längenverstellbare Stativbeine 4 aufweisen, wird der innere Profilabschnitt 22 der Stativbeine 4 bis zum Anschlag in den äußeren Profilabschnitt 21 hineingeschoben und mittels der Klemmeinrichtung 23 befestigt. Damit das Stativ 1 in der Transportstellung kompakt ausgebildet und robust gegen äußere Einflüsse ist, werden die Stativbeine 4 zunächst zugeklappt und anschließend mit Hilfe einer Fixiereinrichtung **24** fixiert. Die Fixiereinrichtung 24 verhindert, dass sich die Stativbeine 4 um die Kippgelenke 5 bewegen können.

Die Höheneinstelleinrichtung 13 ist auf der den Stativbeinen 4 zugewandten Unterseite 14 des Stativkopfes 3 angeordnet. Diese Anordnung der Höheneinstelleinrichtung 13 führt in der Transportstellung zu einem kompakten Aufbau des Stativs 1, da kein zusätzlicher Platzbedarf für die Höheneinstelleinrichtung 13 besteht. Der Raum zwischen den Stativbeinen 4 kann nicht für andere Zwecke benutzt werden. Ein weiterer Vorteil dieser Anordnung der Höheneinstelleinrichtung 13 besteht darin, dass die Höheneinstelleinrichtung 13 beim Transport des Stativs 1 durch die Stativbeine 4, die Kippgelenke 5 und den Stativkopf 3 geschützt ist. Die Höheneinstelleinrichtung 13 ist vollständig in einem Schutzraum **25,** der von dem Stativkopf 3, den Stativbeinen 4 und den Kippgelenken 5 aufgespannt wird, angeordnet.

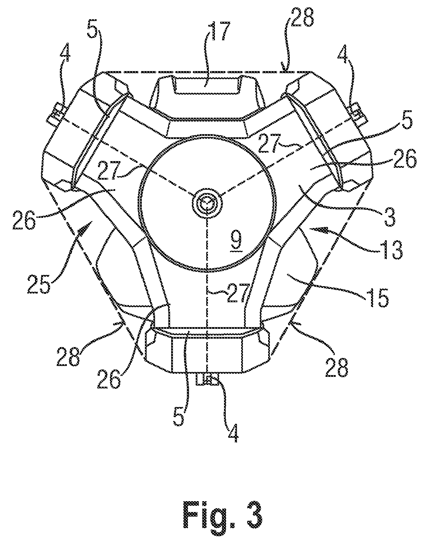

**Fig. 3** zeigt das erfindungsgemäße Stativ 1 der Fig. 2, das in der Transportstellung angeordnet ist, in einer Aufsicht auf den Stativteller 9, den Stativkopf 3, die Kippgelenke 5 und das Gehäuse 15 der Höheneinstelleinrichtung 13.

Der Stativteller 9 ist auf der Oberseite 10 des Stativkopfes 3 angeordnet und mit der Führungsstange 11 verbunden. Der Stativkopf 3 ist symmetrisch um einen Mittelpunkt, der mit dem Mittelpunkt der Führungsstange 11 übereinstimmt, in Form eines Y mit drei Schenkeln **26** ausgebildet. Die Mittellinien **27** der Schenkel 26 schließen jeweils einen Winkel von 120° ein. Die Kippgelenke 5, die den Stativkopf 3 mit den Stativbeinen 4 verbinden, sind am Stativkopf 3 symmetrisch an den dem Mittelpunkt abgewandten Enden der Schenkel 26 angeordnet.

Die Höheneinstelleinrichtung 13 ist vollständig im Schutzraum 25, der vom Stativkopf 3, den Stativbeinen 4 und den Kippgelenken 5 gebildet ist, angeordnet. Der Schutzraum 25 ist kein vollständig geschlossener Raum, er ist zwischen den Kippgelenken 5 und zwischen den Stativbeinen 4 offen ausgebildet. Die Aufsicht auf den Stativkopf 3 in Fig. 3 zeigt, dass die Kippgelenke 5 als Vorsprünge ausgebildet sind und soweit herausragen, dass das Gehäuse 15 der Höheneinstelleinrichtung 13 ebene Verbindungsflächen **28,** die zwischen den Kippgelenken 5 und den Stativbeinen 4 liegen, nicht schneidet und nicht berührt.

Bei einem Sturz des Stativs 1 in der Transportstellung auf einen ebenen Untergrund oder ein großflächiges ebenes Hindernis kommt es zu einem Aufprall auf die Stativbeine 4, den Stativkopf 3 und/oder die Kippgelenke 5. Der Stativkopf 3 und/oder die Kippgelenke 5 sind aus einem Material ausgebildet, dass ein höheres Energieabsorptionsvermögen als das Gehäuse 15 der Höheneinstelleinrichtung 13 aufweist. Ein Großteil der Energie wird vom Stativkopf 3, den Stativbeinen 4 oder den Kippgelenken 5 aufgenommen, so dass die Gefahr, die Höheneinstelleinrichtung 13 zu beschädigen, reduziert ist.

## Patentansprüche

1. Stativ (1) zur Höheneinstellung eines Gerätes (2) in einer Höhenrichtung (12) mit einem Stativkopf (3), Stativbeinen (4), die mit dem Stativkopf (3) über Kippgelenke (5) verbunden und zwischen einer Standstellung und einer Transportstellung verstellbar sind, einer Aufnahmeeinrichtung (9) zur Aufnahme des Gerätes (2) und einer Führungseinrichtung (11), die mit der Aufnahmeeinrichtung (9) verbunden und in der Höhenrichtung (12) verstellbar ist, wobei eine automatische Höheneinstelleinrichtung (13) zur Höheneinstellung der Führungseinrichtung (11) vorgesehen ist, **dadurch gekennzeichnet, dass** die Höheneinstelleinrichtung (13) am Stativkopf (3) auf der den Stativbeinen (4) zugewandten Unterseite (14) des Stativkopfes (3) angeordnet und in der Transportstellung vollständig von einem durch den Stativkopf (3), die Stativbeine (4) und die Kippgelenke (5) aufgespannten Schutzraum (25) umgeben ist.

2. Stativ nach Anspruch 1, **dadurch gekennzeichnet, dass** der Stativkopf (3) und/oder die Kippgelenke (5) zumindest teilweise aus einem Material ausgebildet sind, das ein größeres Energieabsorptionsvermögen als ein die Höheneinstelleinrichtung (13) umgebendes Gehäuse (14) aufweist.

3. Stativ nach einem der Ansprüche 1 bis 2, **dadurch gekennzeichnet, dass** die Höheneinstelleinrichtung (13) eine Antriebseinheit (16), die mit der Führungseinrichtung (11) zusammenwirkt, und eine Überlastschutzeinrichtung aufweist, wobei die Überlastschutzeinrichtung die Führungseinrichtung (11) bei Überschreiten einer Maximallast von der Antriebseinheit (16) entkoppelt.

4. Stativ nach Anspruch 3, **dadurch gekennzeichnet, dass** die Führungseinrichtung als Zahnstange (11) ausgebildet ist und die Antriebseinheit (16) einen Elektromotor und ein Untersetzungsgetriebe aufweist, wobei das Untersetzungsgetriebe eine Rutschkupplung als Überlastschutzeinrichtung umfasst.

## Claims

1. A tripod (1) for adjusting the height of an apparatus (2) in direction of elevation (12), said tripod (1) comprising a tripod head (3); tripod legs (4), which are attached to the tripod head (3) via articulated joints (5) and are adjustable between a standing position and a transport position; holding means (9) for holding the apparatus (2); and a guide device (11) which is attached to the holding means (9) and is adjustable in direction of elevation (12), an automatic height-adjusting device (13) being provided for adjusting the height of the guide device (11),
**characterized in that** the height-adjusting device (13) is disposed on the underside (14) of the tripod head (3) facing the tripod legs (4) and in the transport position is completely surrounded by a protective space (25) defined by the tripod head (3), tripod legs (4) and articulated joints (5).

2. A tripod according to Claim 1, **characterized in that** the tripod head (3) and/or articulated joints (5) are at least partly formed of a material which has a greater energy-absorbing capacity than a housing (14) surrounding the height-adjusting device (13).

3. A tripod according to one of Claims 1 or 2, **characterized in that** the height-adjusting device (13) includes a drive unit (16), which cooperates with the guide device (11), and an overload protection device, the overload protection device disconnecting the guide device (11) from the drive unit (16) in the event of a maximum load being exceeded.

4. A tripod according to Claim 3, **characterized in that** the guide device takes the form of a toothed rack (11), and the drive unit (16) comprises an electric motor and a reduction gear, the reduction gear comprising a friction clutch as overload protection device.

## Revendications

1. Trépied (1) pour le réglage en hauteur d'un appareil (2) dans une direction de hauteur (12), comportant une tête de trépied (3), des pieds de trépied (4) qui sont reliées à la tête de trépied (3) par l'intermédiaire de joints articulés (5) et qui peuvent être réglées entre une position debout et une position de transport, un dispositif de réception (9) destiné à recevoir l'appareil (2) et un dispositif de guidage (11) qui est relié au dispositif de réception (9) et qui peut être réglé dans la direction de hauteur (12), dans lequel un dispositif de réglage automatique de hauteur (13) est prévu pour le réglage en hauteur du dispositif de guidage (11), **caractérisé en ce que** le dispositif de réglage de hauteur (13) est agencé sur la tête de trépied (3), sur le côté inférieur (14) de la tête de trépied (3), dirigé vers les pieds de trépied (4), et qui, dans la position de transport, est entièrement entouré par un espace de protection (25) défini par la tête de trépied (3), les pieds de trépied (4) et les joints articulés (5).

2. Trépied selon la revendication 1, **caractérisé en ce que** la tête de trépied (3) et/ou les joints articulés (5) sont formés au moins partiellement à partir d'un matériau qui a un pouvoir d'absorption d'énergie plus élevé que celui d'un boîtier (14) entourant le dispositif de réglage de hauteur (13).

3. Trépied selon l'une des revendications 1 à 2, **caractérisé en ce que** le dispositif de réglage de hauteur (13) comporte une unité d'entraînement (16) qui coopère avec le dispositif de guidage (11), et un dispositif de protection contre les surcharges, dans lequel le dispositif de protection contre les surcharges désaccouple le dispositif de guidage (11) de l'unité d'entraînement (16) lorsqu'une charge maximale est dépassée.

4. Trépied selon la revendication 3, **caractérisé en ce que** le dispositif de guidage est réalisé sous la forme d'une barre dentée (11) et l'unité d'entraînement (16) comporte un moteur électrique et un engrenage réducteur, dans lequel l'engrenage réducteur inclut un embrayage à friction comme dispositif de protection contre les surcharges.
